# EUROPÄISCHE PATENTSCHRIFT

(11) **EP 1 190 682 B1**
(45) Veröffentlichungstag und Bekanntmachung des Hinweises auf die Patenterteilung: **29.11.2006**
(21) Anmeldenummer: 01121045.7
(22) Anmeldetag: 01.09.2001
(51) Int. Cl.: A61C 9/00

(54) **Steckverbindung für Kieferstumpfmodelle**
Dowel pin for dental working model
Cheville d'ancrage pour une pièce moulée dentaire

(30) Priorität: 13.09.2000 DE 10045543
(43) Veröffentlichungstag der Anmeldung: 27.03.2002
(73) Patentinhaber: DeguDent GmbH, 63457 Hanau-Wolfgang (DE)
(72) Erfinder: Birkholz, Ulrich., DE-69469 Weinheim (DE); Rabenstein, Norbert., DE-63403 Hanau (DE); Hantschel, Wilfried., DE-61197 Florstadt (DE); Kremer, Egbert., DE-63454 Hanau (DE)
(74) Vertreter: Stoffregen, Hans-Herbert

(56) Entgegenhaltungen:
- CA-A1- 1 069 355
- FR-A1- 2 752 723
- US-A- 4 801 264
- US-A- 5 934 906

## Beschreibung

Die Erfindung betrifft eine Steckverbindung für Kieferstumpfmodelle zur lösbaren Befestigung von Zahnkranz- oder Kiefersegmenten auf einem Modellsockel, mit einem Steckstift und einer Hülse, wobei der Steckstift rastend mit der Hülse verbindbar ist und eine Verdrehsicherung eine Rotationsbewegung des Steckstiftes in der Hülse verhindert.

Wird im Rahmen einer zahnmedizinischen Behandlung der Ersatz einzelner oder mehrerer Zähne, eventuell sogar der Ersatz eines Kiefersegments notwendig, so müssen die dafür vorgesehenen Implantate jeweils speziell für den Patienten hergestellt und angepaßt werden. Dazu wird oft ein Gebißabdruck des Patienten erstellt, der als Ausgangsform für ein Kieferstumpfmodell dient. Dieses Kieferstumpfmodell ist ein identisches Abbild von dem Gebiß des Patienten. Der von dem Implantat, beispielsweise ein Zahnkranzsegment, im Mundraum des Patienten zu ersetzende Bereich wird in dem Modell entfernt. Ein vorgefertigter Implantatrohling kann nun schrittweise an das Modell angepaßt werden, bis er die für die Behandlung des Patienten notwendige Form erreicht hat. Das auf diese Weise speziell für den Patienten angefertigte Implantat kann dann operativ im Mundraum des Patienten befestigt werden, ohne daß eine aufwendige Bearbeitung des Implantats oder eine Nachbehandlung notwendig werden.

Für die dem chirurgischen Eingriff vorausgehende Anpassung des Implantats an das Kieferstumpfmodell des Patienten muß das Implantat zunächst am Modell befestigt werden. Im Verlauf der schrittweisen Anpassung und Nachbesserung ist es jedoch fast immer erforderlich, daß das Implantat mehrfach dem Modell entnommen und erneut daran befestigt wird. Dabei muß sichergestellt sein, daß das Implantat nach jeder zwischenzeitlichen Entnahme wieder an exakt derselben Position am Kieferstumpfmodell befestigt wird. Anderenfalls wäre eine genaue Anpassung des Implantats an das Modell und damit an den Patienten nicht möglich.

Aus diesem Grund ist es bekannt, daß im Implantat Steckstifte befestigt werden, mit denen das Implantat in entsprechende Bohrungen im Modell gesteckt werden kann. Da das Modell jedoch beispielsweise aus Gips hergestellt sein kann, besteht die Gefahr, daß bei jedem Befestigen oder Entnehmen des Implantats die Bohrungen durch Materialabrieb beschädigt werden, so daß eine exakte Positionierung des Implantats nicht auf Dauer gewährleistet ist.

In der Offenlegungsschrift EP 0 335 285 A2 sind beispielsweise Steckverbindungen beschrieben, die neben einem Steckstift auch eine Hülse aufweisen, die in das Kieferstumpfmodell eingelassen wird. Diese besteht aus hinreichend widerstandsfähigem Material, beispielsweise Metall, und verhindert eine mögliche Beschädigung des Kieferstumpfmodells durch den Steckstift.

Da eine solche rotationssymmetrische Steckverbindung Drehbewegungen des Implantats um die Stiftachse nicht verhindern kann, sind zusätzliche Maßnahmen für die sichere und reproduzierbare Befestigung des Implantats am Kieferstumpfmodell notwendig. So ist es bekannt, daß eine Drehbewegung des Implantats durch zwei benachbart angebrachte Steckverbindungen verhindert wird (DT 26 25 950 A1). Dies ist jedoch mit einem hohen Arbeitsaufwand sowie großem Platzbedarf verbunden, der nicht in allen Fällen möglich oder vertretbar ist.

Sind bei derartigen Steckverbindungen die Hülse und der Steckstift nicht exakt achsparallel ausgerichtet, so kommt es beim Befestigen und Entnehmen des Implantats vom Modell häufig zum Verkanten des Steckstifts in der Hülse. Die dadurch verursachten Belastungen können sowohl das Kieferstumpfmodell als auch vor allem die Befestigung des Steckstifts im Implantat beschädigen, so daß es zu einem Präzisionsverlust bei der Herstellung des Implantats kommen kann. Je mehr Steckverbindungen für ein Implantat verwendet werden, um beispielsweise Drehbewegungen des Implantats auszuschließen, um so höhere Anforderungen sind an die exakte Ausrichtung der Steckverbindungen zu stellen, um Spannungen oder ein Verkanten zu vermeiden.

Bei einer bereits bekannten Steckverbindung (DE 43 00 926 A1) ist der Steckstift leicht konisch ausgeführt, so daß erst bei vollständigem Eindringen des Steckstifts in die ebenfalls konisch zulaufende Hülse ein ausreichend fester Form- und Reibschluß zwischen dem Steckstift und der Hülse entsteht. Durch warzenförmige Erhöhungen auf der Innenseite der aus Kunststoff bestehenden Hülse kann die Haltekraft des Steckstifts in der Hülse erhöht werden. Eine sichere Verbindung des Steckstifts in der Hülse ist aber auch hier nur bei exakt achsparalleler Ausrichtung der beiden Teile gewährleistet. Zudem ist zur Verhinderung einer Drehbewegung des Implantats dessen Befestigung am Modell mit mindestens zwei solchen Steckverbindungen notwendig.

Aus der FR 2 752 723 A1 ist eine Steckverbindung für Kieferstumpfinodelle bekannt, bei der Steckstift und Hülse durch ineinandergreifende Vorsprünge bzw. Ausnehmungen miteinander verrasten. Steckstift und Hülse bestehen aus Kunststoff.

Die CA 1 069 355 A bezieht sich auf eine Steckverbindung mit konisch verlaufender Hülse und entsprechend geometrisch angepasstem Steckstift, wobei Steckstift und Hülse miteinander verrastbar sind.

Um einen Steckstift zu einer Hülse einer Steckverbindung gegenüber einer Rotationsbewegung zu sichern, geht nach der US 5,934,906 von dem Stift ein Vorsprung aus, der in eine entsprechende Aussparung in der Umfangswandung der Hülse eingreift.

Zur Verdrehsicherung zwischen Hülse und Steckstift einer Steckverbindung nach der US 4,801,264 gehen von einem zylindrischen Hauptteil des Steckstiftes seitliche Rippen unterschiedlicher Längen aus, die in eine geometrisch entsprechend angepasste Ausnehmung der Hülse nur bei eindeutiger Orientierung zueinander einbringbar ist.

Immer weiter fortschreitende Entwicklungen der Dentalmedizin bei der Verwendung von Implantaten erfordern eine zunehmende Präzision bei der Herstellung und Anpassung der Implantate. Auf Grund der ständigen und hohen Belastung eines eingesetzten Implantats im Mundraum, beispielsweise beim Kauen, ist ein bestmöglich an den jeweiligen Patienten angepaßtes Implantat Voraussetzung für eine feste Verbindung des Implantats mit dem Kiefer des Patienten, die diese Belastungen dauerhaft aushält.

Aufgabe der Erfindung ist es demzufolge, eine Steckverbindung der eingangs genannten Gattung für Kieferstumpfmodelle so auszugestalten, daß eine sichere und einfach lösbare Befestigung des Implantats auf dem Modellsockel möglich ist, wobei eine Drehbewegung des Implantats um die Achse der Steckverbindung ausgeschlossen sein soll. Darüber hinaus sollen Spannungen und ein Verkanten des Steckstifts in der

Hülse auch bei einer nicht exakt achsparallelen Ausrichtung der beiden Teile vermieden werden.

Diese Aufgabe wird erfindungsgemäß dadurch gelöst, dass der Steckstift an dem der Hülse zugewandten Ende ein Federelement mit Zumindest einer Ausnehmung zur rastenden Verbindung mit der Hülse aufweist.

Eine rastende Verbindung des Steckstifts mit der Hülse führt zu einer ausreichend stabilen Befestigung des Implantats auf dem Modellsockel. Der Steckstift kann deshalb so gestaltet sein, daß er fast vollständig mit einem die Handhabung wesentlich erleichternden Spiel in die Hülse eingeführt werden kann. Erst in der durch die rastende Verbindung vorgegebenen Endposition ist der Steckstift auf einer vorgegebenen Position fixiert. Zum Abnehmen des Implantats muß nur die rastende Verbindung des Steckstifts mit der Hülse gelöst werden. Danach kann der Steckstift vollständig aus der Hülse herausgezogen werden, ohne daß dabei Spannungen auftreten können oder ein Verkanten des Steckstifts mit der Hülse zu befürchten ist. Durch die rastende Verbindung wird automatisch eine einheitliche Eindringtiefe des Steckstifts in die Hülse sichergestellt. Erst wenn das Implantat in der dafür vorgesehenen Position auf dem Modellsockel angeordnet ist, wird die rastende Verbindung zwischen dem Steckstift und der Hülse hergestellt.

Durch die Verdrehsicherung ist eine Rotationsbewegung des Steckstifts in der Hülse ausgeschlossen. Dadurch ist es mit einer einzigen Steckverbindung möglich, eine mögliche Drehbewegung des auf dem Modellsockel befestigten Implantats zu verhindern. Zusätzliche Steckverbindungen sind deshalb nicht notwendig. Dies führt neben einer Arbeits- und Materialersparung auch dazu, daß eine solche Steckverbindung auch bei sehr kleinen Implantaten mit geringer Kontaktfläche zum Modellsockel verwendet werden kann.

Es ist vorgesehen, daß die maximale Eindringtiefe des Steckstifts in die Hülse durch einen Anschlag begrenzt ist. Ein solcher Anschlag kann mit einfachen fertigungstechnischen Mitteln, beispielsweise durch die Länge des Steckstifts oder einen radial aus dem Steckstift herausragenden Vorsprung vorgegeben werden. Zusätzlich zu der rastenden Verbindung kann auf diese Weise die maximale Eindringtiefe des Steckstifts in die Hülse mit weniger Aufwand sicher und präzise bestimmt werden.

Erfindungsgemäß erfolgt das Verrasten zwischen Steckstift und hülse dadurch, daß der Steckstift an dem der Hülse zugewandten Ende ein Federelement mit Ausnehmungen zur rastenden Verbindung mit der Hülse aufweist. Beim Einführen des Steckstifts in die Hülse wird das Federelement von einem in den Innenraum der Hülse ragenden Vorsprung leicht verbogen, bis das Federelement im Bereich der dafür vorgesehenen Ausnehmung rastend mit dem Vorsprung der Hülse verbunden ist. Die für die Verformung des Federelements notwendige Kraft kann durch die Formgebung und das Material des Federelements bestimmt werden. Das Federelement wird dabei zweckmäßigerweise so gestaltet, daß einerseits eine ausreichend sichere rastende Verbindung des Steckstifts mit der Hülse gewährleistet ist, andererseits Beschädigungen der Hülse oder des Steckstifts bzw. des damit verbundenen Implantats durch zu große Belastungen ausgeschlossen sind.

Vorteilhafterweise ist vorgesehen, daß das Federelement einen im wesentlichen zylindrischen Grundkörper aufweist, der mit mindestens einem durchgehenden, sich bis zu dem der Hülse zugewandten Ende erstreckenden Längsschlitz in mehrere Federzungen unterteilt ist. Auf diese Weise ist mit einfachen Mitteln ein robustes und im wesentlichen von der Ausrichtung des Steckstifts in der Hülse unabhängiges Federelement herstellbar. Zusätzlich am Steckstift angebrachte Bauteile sind für ein derartiges Federelement nicht notwendig. Durch die Abmaße der Längsschlitze kann in Abhängigkeit von dem Material des Steckstiftes die für eine Verformung der Federzungen notwendige Kraft vorgegeben werden.

Gemäß einer Ausführung des Erfindungsgedankens ist vorgesehen, daß der in den Innenraum der Hülse ragende Vorsprung als ringförmig umlaufender Wulst ausgeführt ist. In Verbindung mit einer entsprechend gestalteten Ausnehmung am Federelement kann so eine rastende Verbindung des Steckstifts mit der Hülse entlang des gesamten Umfangs erfolgen. Die für eine sichere Befestigung des Steckstifts in der Hülse notwendige Rückhaltekraft kann gleichmäßig auf den ringförmig umlaufenden Wulst verteilt werden und muß nicht punktuell erfolgen. Die Rastverbindung kann über mehrere Federzungen verteilt erfolgen, so daß eine geringe Wulsthöhe und dadurch während des Einführens des Steckstifts eine geringe Verbiegung der Federzungen für eine sichere Befestigung des Implantats auf dem Modellsockel ausreicht.

Es ist auch vorgesehen, daß die Ausnehmung des Federelements als eine durchgehende Querbohrung senkrecht zur Stiftachse ausgeführt ist, welche einen als Raststift ausgeführten, in den Innenraum der Hülse ragenden Vorsprung rastend umgreift. Die Funktion des den Hülsenquerschnitt verengenden, ringförmig umlaufenden Wulstes kann auch ein quer im Innenraum der Hülse angebrachter Raststift ausüben. Beim Einführen des Steckstifts in die Hülse werden die einzelnen Rastzungen dann nicht zusammengedrückt, sondern leicht nach außen gebogen. Die für die rastende Verbindung vorgesehene Ausnehmung des Federelements kann fertigungstechnisch einfach als Querbohrung durch das Federelement erfolgen. In der Endposition des Steckstifts befindet sich der Raststift im Bereich der Querbohrung des Federelements, welches den Raststift dann rastend umgreift. Da sowohl die Querbohrung im Federelement des Steckstifts als auch der Raststift im Innenraum der Hülse für eine rastende Verbindung entlang einer gemeinsamen Achse senkrecht zur Stiftachse ausgerichtet sind, ist damit auch eine bestimmte azimutale Position des Steckstifts vorgegeben. Jede geringfügige Verdrehung aus dieser Position heraus bewirkt eine dieser Drehbewegung entgegenwirkende Federkraft.

Vorteilhafterweise ist vorgesehen, daß in der durch den Anschlag vorgegebenen Endposition des Steckstifts in der Hülse die Ausnehmung des Federelements einen definierten Versatz relativ zu dem in den Innenraum der Hülse ragenden Vorsprung aufweist, so daß der Steckstift zusätzlich mit einer permanent wirkenden Zugkraft in der Endposition fixiert ist. Die Federwirkung des Federelements bewirkt eine Kraft, die den Steckstift in das Hülseninnere zieht. Ohne den die Endposition vorgebenden Anschlag würde der Steckstift auf Grund dieser Zugkraft so weit in die Hülse eindringen, bis die Ausnehmung des Federelements über den in den Innenraum der Hülse ragenden Vorsprung zu liegen kommt und die Verformung des Federelements minimiert ist. Diese permanent wirkende Zugkraft muß mindestens überwunden werden, um den Steckstift aus der Hülse zu entfernen. Ein unbeabsichtigtes, geringfügiges Herausrutschen des Steckstifts aus der Hülse wird dadurch vermieden. Eine derartige Gestaltung der rastenden Verbindung des Steckstifts mit der Hülse führt auch bei fertigungstechnisch nicht zu vermeidenden Abweichungen der Abmessungen von dem Steckstift und der Hülse sowie bei einer nicht exakt achsparallelen Ausrichtung der beiden Bauteile zu einer genau definierten und reproduzierbaren Befestigungsposition des Implantats auf dem Modellsockel.

Einer vorteilhaften Ausführung des Erfindungsgedankens zufolge ist vorgesehen, daß der Steckstift eine im wesentlichen zylinderförmige Grundform mit einem mindestens stellenweise radial vorspringenden, nicht rotationssymmetrischen Verdrehsicherungsabschnitt aufweist, der im Bereich der Hülsenöffnung mit einem daran angepaßten Innenraum der Hülse in Eingriff steht. Erst wenn der Steckstift nahezu vollständig in die Hülse eingeführt ist, treten seitlich herausragende, nicht rotationssymmetrische Vorsprünge des Steckstifts mit der Hülse in Eingriff. Im Bereich der Hülsenöffnung ist die Hülse so gestaltet, daß dieser Verdrehsicherungsabschnitt des Steckstifts nur in einer bestimmten Ausrichtung in die Hülse eingeführt werden kann. Ist dieser Verdrehsicherungsabschnitt zumindest teilweise in die Hülse eingeschoben, so ist ein Verdrehen des Steckstifts nicht mehr möglich. Die Länge des Verdrehsicherungsabschnitts kann dabei an die jeweiligen Anforderungen angepaßt sein.

Einer Ausführung des Erfindungsgedankens zufolge ist vorgesehen, daß der Verdrehsicherungsabschnitt eine radial vorspringende, im wesentlichen zylinderförmige Grundform mit mindestens einer sich parallel zur Steckstiftachse erstrekkenden, ebenen Anflachung aufweist und daß die Hülse im Bereich der Hülsenöffnung einen daran angepaßten, nach innen ragenden Vorsprung aufweist. Eine solche Anflachung im ansonsten zylinderförmigen Verdrehsicherungsabschnitt kann während der Herstellung ohne großen Aufwand erzielt werden. Eine daran angepaßte Gestaltung der Hülsenöffnung läßt nur eine einzige Ausrichtung des Steckstifts in der Hülse zu. Einer Verdrehung des Steckstifts in der Hülse wirkt ein an der Anflachung angreifender Gegendruck der Hülse entgegen.

Einer vorteilhaften Ausgestaltung des Erfindungsgedankens zufolge ist vorgesehen, daß der Durchmesser des Federelements höchstens so groß wie der kleinste Innendurchmesser der Hülse im Bereich der Hülsenöffnung ist. Dadurch ist sichergestellt, daß das Federelement des Steckstifts ungehindert und unabhängig von der Ausrichtung des Steckstifts in die Hülse eingeführt werden kann. Das Implantat kann schon jetzt nicht mehr unbeabsichtigt vom Modellsockel fallen. Eine exakte Ausrichtung des Implantats ist bei dem teilweise eingeführten Steckstift wesentlich erleichtert.

Weitere Ausführungen des Erfindungsgedankens sind Gegenstand weiterer Unteransprüche.

Nachfolgend werden Ausführungsbeispiele der Erfindung näher erläutert, die in der Zeichnung dargestellt sind.

Es zeigt:
Fig. 1 eine Seitenansicht eines Steckstifts,
Fig. 2 eine Draufsicht in Richtung II des in Fig. 1 dargestellten Steckstifts,
Fig. 3 einen Schnitt durch eine Hülse,
Fig. 4 eine Stirnansicht in Richtung IV der in Fig. 3 dargestellten Hülse,
Fig. 5 eine Seitenansicht in Richtung V des in Fig. 1 dargestellten Steckstifts,
Fig. 6 eine Seitenansicht in Richtung VI der in Fig. geschnitten dargestellten Hülse,
Fig. 7 eine Seitenansicht eines anders gestalteten Steckstifts,
Fig. 8 eine Draufsicht in Richtung VIII des in Fig. 7 dargestellten Steckstifts,
Fig. 9 einen Schnitt durch eine an den in Fig. 7 gezeigten Steckstift angepaßte Hülse,
Fig. 10 eine Stirnansicht in Richtung X der in Fig. 9 dargestellten Hülse,
Fig. 11 eine Seitenansicht in Richtung XI des in Fig. 7 dargestellten Steckstifts,
Fig. 12 eine Seitenansicht in Richtung XII der in Fig. 9 dargestellten Hülse,
Fig. 13 eine Seitenansicht eines wiederum anders gestalteten Steckstifts,
Fig. 14 eine Draufsicht in Richtung XIV auf den in Fig. 13 dargestellten Steckstift,
Fig. 15 einen Schnitt durch eine an den in der Fig. 13 dargestellten Steckstift angepaßte Hülse und
Fig. 16 einen Schnitt entlang der Linie XVI-XVI der in Fig. 15 dargestellten Hülse.

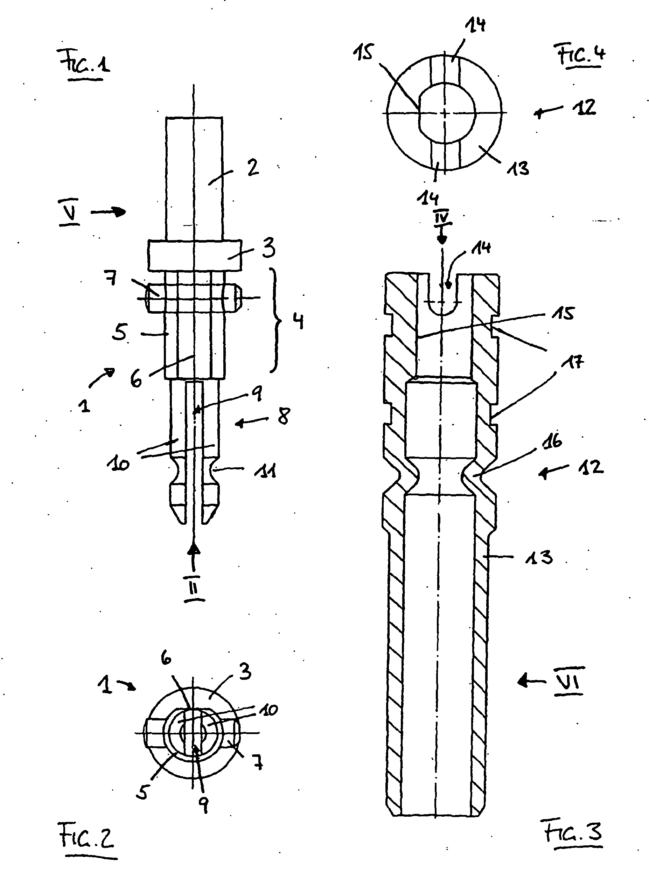

Der in den Fig. 1 und 2 gezeigte Steckstift 1 weist einen zylinderförmigen Schaft 2 auf, an welchem das Implantat befestigt wird. Ein radial umlaufender Vorsprung 3 begrenzt den im Implantat befestigbaren Schaft 2 und bildet einen Anschlag, der beim Einführen des Steckstifts 1 in eine zugehörige Hülse die Endposition des Steckstifts 1 vorgibt. An den umlaufenden, radialen Vorsprung 3 schließt sich der Verdrehsicherungsabschnitt 4 an. Der Verdrehsicherungsabschnitt 4 weist eine im wesentlichen zylinderförmige Grundform 5 mit einer sich parallel zur Steckstiftachse erstrekkenden, ebenen Anflachung 6 auf. Zusätzlich zu der wegen der ebenen Anflachung 6 nicht rotationssymmetrischen Gestaltung des Verdrehsicherungsabschnitts 4 weist dieser einen durchgehenden, auf beiden Seiten herausragenden Querstift 7 auf. Am hülsenseitigen Ende des Steckstifts 1 befindet sich ein Federelement 8. Ein durchgehender Längsschlitz 9 unterteilt das ebenfalls im wesentlichen zylinderförmige Federelement 8 in zwei Federzungen 10 mit jeweils fast halbkreisförmigem Querschnitt. Die beiden Federzungen 10 sind mit einer kreisförmig umlaufenden Ringnut 11 versehen.

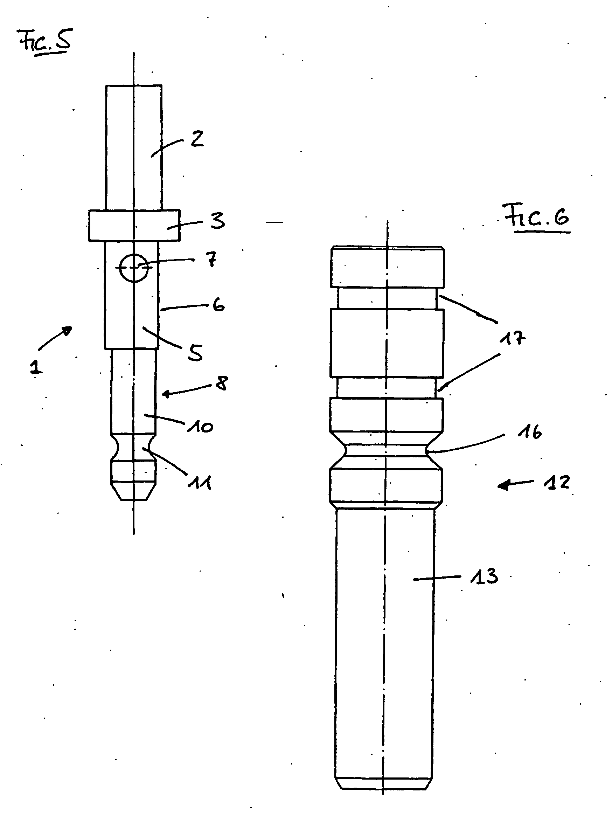

Der in den Fig. 1 und 2 gezeigte Steckstift 1 ist für eine Verwendung zusammen mit der in den Fig. 3 und 4 gezeigten Hülse 12 vorgesehen. Die Hülse 12 besteht aus einem im wesentlichen zylinderförmigen Hülsengrundkörper 13. An dem den Steckstift 1 aufnehmenden Ende des Hülsengrundkörpers 13 befinden sich zwei gegenüberliegende, längliche abgerundete Ausnehmungen 14. Diese dienen zur Aufnahme des an beiden Seiten überstehenden Querstifts 7. Der im Bereich der Hülsenöffnung im wesentlichen zylinderförmige Innenraum ist an einer Seite durch einen an die ebene Anflachung 6 des Steckstifts 1 angepaßten flachen Vorsprung 15 eingeengt. Die länglichen abgerundeten Ausnehmungen 14 sowie der flache Vorsprung 15 sind dabei so relativ zueinander angeordnet, daß der Steckstift 1 bis zu dem durch den umlaufenden, radialen Vorsprung 3 gegebenen Anschlag in die Hülse 12 eingeführt werden kann.

Der Hülsengrundkörper 13 weist eine ringförmig umlaufende Einschnürung 16 auf. Der Innenraum des Hülsengrundkörpers 13 wird durch die ringförmig umlaufende Einschnürung 16 so weit eingeengt, daß die beiden Federzungen 10 des Steckstifts 1 beim Einführen in die Hülse 12 zusammengedrückt werden. Erst wenn der Steckstift 1 nahezu vollständig in die Hülse 12 eingeführt wurde, kommt die Ringnut 11 in den Bereich der Einschnürung 16 und ermöglicht eine Entspannung der beiden Federzungen 10. Die beiden Federzungen 10 mit der Ringnut 11 bilden zusammen mit der ringförmig umlaufenden Einführung 16 des Hülsengrundkörpers 13 eine rastende Verbindung.

An der Außenseite des Hülsengrundkörpers 13 befinden sich mehrere ringförmig umlaufende Vertiefungen 17. Diese dienen zu einer ausreichend stabilen Befestigung der Hülse 12 im Modellsockel des Kieferstumpfmodells.

Es ist ebenso möglich, daß das Federelement 8 nur eine einzige Federzunge 10 aufweist. Durch die Formgebung und Materialwahl dieser einzelnen Federzunge kann sichergestellt werden, daß dennoch eine ausreichend sichere rastende Verbindung des Steckstifts 1 mit der Hülse 12 gewährleistet wird. In gleicher Weise können statt nur eines Längsschlitzes 9 mehrere Längsschlitze das Federelement 8 in eine entsprechend größere Anzahl von Federzungen unterteilen.

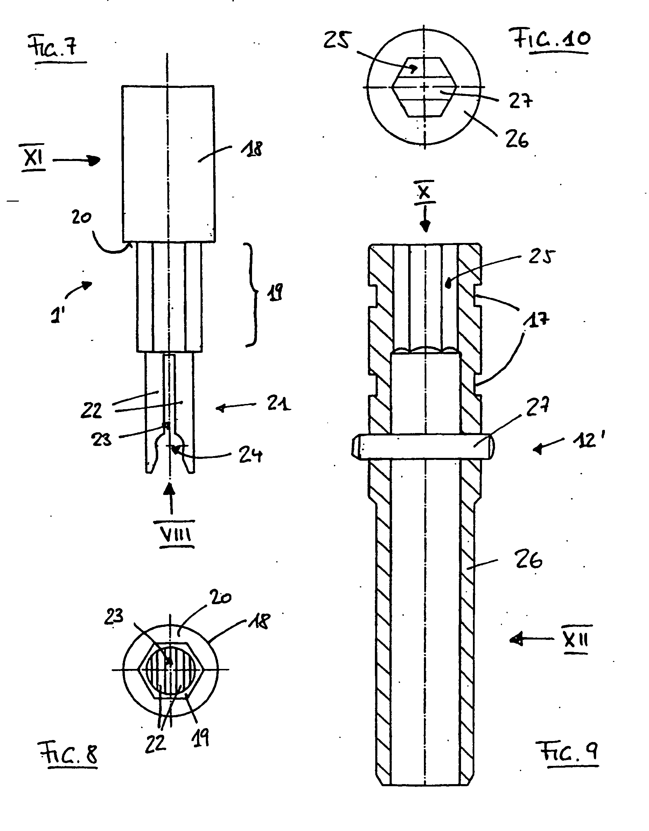

Fig. 5 zeigt eine Seitenansicht in Richtung V des in Fig. 1 dargestellten Steckstifts 1. Die ebene Anflachung 6 sowie der Querstift 7 weichen sichtbar von dem ansonsten nahezu rotationssymmetrischen Aufbau des Steckstifts 1 ab. Die in Fig. 6 dargestellte Seitenansicht der Hülse 12 zeigt deren rotationssymmetrisch getastete Außenform. Durch die ringförmig umlaufende Einschnürung 16 sowie die Vertiefungen 17 kann eine sichere Befestigung der Hülse 12 im Modellsockel erreicht werden.

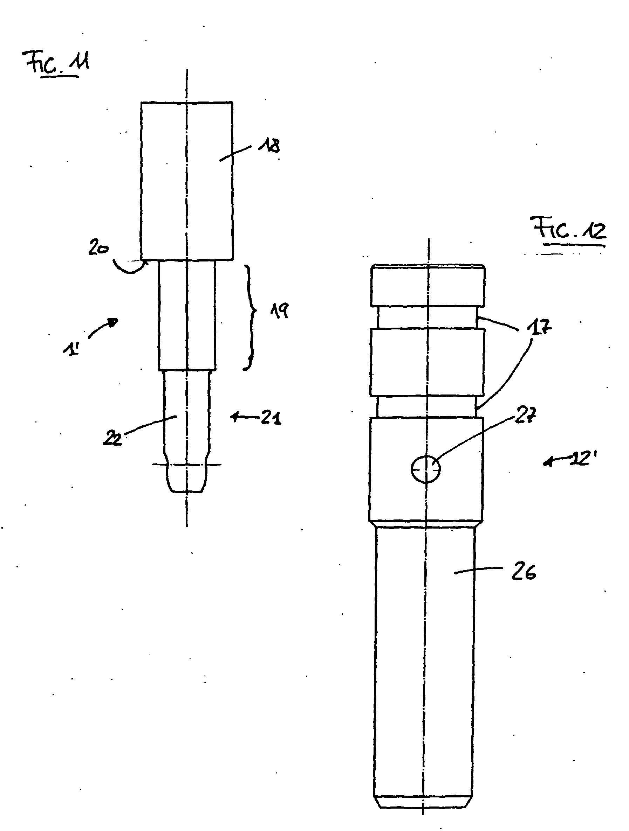

Eine andere Ausführung eines Steckstifts 1' ist in den Fig. 7 und 8 dargestellt. An einen zylinderförmigen Schaft 18 schließt sich ein Verdrehsicherungsabschnitt 19 mit einer hexagonalen Querschnittsfläche an. Auf Grund des größeren Durchmessers des Schafts 18 verglichen mit dem Verdrehsicherungsabschnitt 19 bildet die umlaufende Stirnfläche 20 des Schafts 18 einen Anschlag, der ein weiteres Eindringen des Steckstifts 1' in eine daran angepaßte Hülse verhindert. Nach dem Verdrehsicherungsabschnitt 19 befindet sich das Federelement 21, das wie auch bei dem in der Fig. 1 gezeigten Steckstift 1 zwei Federzungen 22 aufweist, die durch einen durchgehenden Längsschlitz 23 voneinander getrennt sind. Statt einer umlaufenden Ringnut weist das Federelement 21 eine durchgehende Querbohrung 24 auf. Eine an den Steckstift 1' angepaßte Hülse 12' (Fig. 9 und 10) weist einen an den Verdrehsicherungsabschnitt 19 des Steckstifts 1' angepaßten Hülsenöffnungsbereich 25 mit ebenfalls hexagonalem Querschnitt auf. Der Hülsengrundkörper 26 der Hülse 12 weist jedoch statt einer ringförmig umlaufenden Einschnürung einen senkrecht zur Hülsenachse angeordneten, durchgehenden Raststift 27 auf. Beim Einführen des Steckstifts 1' in die Hülse 12' werden die beiden Federzungen 22 im Bereich des Raststifts 27 leicht auseinandergebogen, bis der Raststift 27 sich in der durchgehenden Querbohrung 24 des Federelements 21 befindet. Die beiden Federzungen 22 umgreifen dabei den Raststift 27, so daß es zu einer rastenden Verbindung des Steckstifts 1' mit der Hülse 12' kommt.

Auf Grund des kleinen Durchmessers des Federelements 21 kann der Steckstift 1' bis zum Verdrehsicherungsabschnitt 19 beliebig in die Hülse 12' eingeführt werden. Die hexagonale Querschnittsfläche sowohl des Verdrehsicherungsabschnitts 19 als auch des daran angepaßten Hülsenöffnungsbereichs 25 erfordert eine definierte Ausrichtung des Steckstifts 1' relativ zur Hülse 12'. Der Raststift 27 muß so angeordnet sein, daß ein Umgreifen des Raststifts 27 mit den Federzungen 22 in einer durch den Verdrehsicherungsabschnitt 19 vorgegebenen Ausrichtung des Steckstifts 1' möglich ist.

Eine Seitenansicht des Steckstifts 1' sowie der Hülse 12' ist in den Fig. 11 und 12 dargestellt.

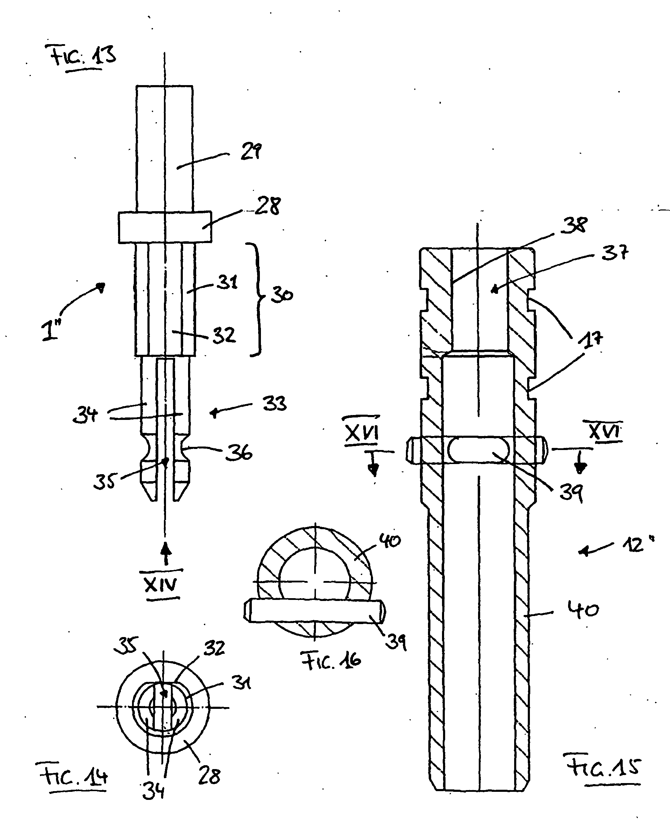

Ein in den Fig. 13 und 14 dargestellter Steckstift 1" weist eine vorteilhafte Kombination einzelner Gestaltungsmerkmale der beiden in den Fig. 1 und 7 gezeigten Steckstifte 1 und 1' auf. Ein radialer, umlaufender Vorsprung 28 trennt den für die Befestigung im Implantat vorgesehenen Schaft 29 von dem in eine Hülse einzuführenden Bereich des Steckstifts 1". Ein Verdrehsicherungsabschnitt 30 weist eine im wesentlichen zylinderförmige Grundform 31 auf, an der sich eine ebene Anflachung 32 befindet. Ein sich daran anschließendes Federelement 33 besteht aus zwei Federzungen 34, die durch einen durchgehenden Längsschlitz 35 voneinander getrennt sind. Das Federelement 33 weist eine umlaufende Ringnut 36 auf.

Eine für die Verbindung mit diesem Steckstift 1" vorgesehene Hülse 12" besitzt demzufolge einen nahezu zylinderförmigen Hülsenöffnungsbereich 37, der an einer Seite einen flachen Vorsprung 38 aufweist. Statt einer ringförmig umlaufenden Einschnürung befindet sich an dieser Stelle ein seitlich versetzt angebrachter Raststift 39. Dieser dringt nur teilweise in den Innenraum des Hülsengrundkörpers 40 ein. Beim Einführen des Steckstifts 1" in die Hülse 12" wird diejenige Federzunge 34, die sich auf der gleichen Seite wie der Raststift 39 befindet, von diesem verbogen. Erst wenn der Steckstift 1" bis zu dem durch den umlaufenden radialen Vorsprung 28 vorgegebenen Anschlag in die Hülse 12" eingeführt ist, befindet sich die Ringnut 36 im Bereich des Raststifts 39. Die den Raststift 39 umgreifende Federzunge 34 stellt im entspannten Zustand eine rastende Verbindung des Steckstifts 1" mit der Hülse 12" her.

Die Steckstifte 1, 1', 1" sowie die Hülsen 12, 12', 12" können einheitlich aus Metall, Keramik oder Kunststoff bestehen. Für spezielle Anwendungen kann jedoch eine mehrteilige Ausführung vorteilhaft sein, die aus verschiedenen Materialien zusammengesetzt ist.

## Patentansprüche

1. Steckverbindung für Kieferstumpfmodelle zur lösbaren Befestigung von Zahnkranz- oder Kiefersegmenten auf einem Modellsockel, mit einem Steckstift (1, 1', 1") und einer Hülse (12, 12', 12"), wobei der Steckstift rastend mit der Hülse verbindbar ist und eine Verdrehsicherung eine Rotationsbewegung des Steckstifts in der Hülse verhindert, **dadurch gekennzeichnet, daß** der Steckstift (1, 1', 1") an dem der Hülse (12, 12', 12") zugewandten Ende ein Federelement (8, 21, 33) mit zumindest einer Ausnehmung zur rastenden Verbindung mit der Hülse (12, 12', 12") aufweist.

2. Steckverbindung nach Anspruch 1,
**dadurch gekennzeichnet,**
**daß** die maximale Eindringtiefe des Steckstifts (1, 1', 1") in die Hülse (12, 12', 12") durch einen Anschlag begrenzt ist.

3. Steckverbindung nach Anspruch 1,
**dadurch gekennzeichnet,**
**daß** das Federelement (8, 21, 33) mindestens eine Federzunge aufweist.

4. Steckverbindung nach Anspruch 1,
**dadurch gekennzeichnet,**
**daß** das Federelement (8, 21, 33) einen im wesentlichen zylindrischen Grundkörper aufweist, der mit mindestens einem durchgehenden, sich bis zu dem der Hülse (12, 12', 12") zugewandten Ende erstreckenden Längsschlitz (9, 23, 35) in mehrere Federzungen (10, 22, 34) unterteilt ist.

5. Steckverbindung nach Anspruch 1,
**dadurch gekennzeichnet,**
**daß** das Federelement (8, 33) eine umlaufende Ringnut (11, 36) aufweist und damit rastend mit einem daran angepaßten, in den Innenraum der Hülse (12, 12") ragenden Vorsprung verbindbar ist.

6. Steckverbindung nach Anspruch 5,
**dadurch gekennzeichnet,**
**daß** der in den Innenraum der Hülse (12) ragende Vorsprung als ringförmig umlaufende Einschnürung (16) ausgeführt ist.

7. Steckverbindung nach Anspruch 5,
**dadurch gekennzeichnet,**
**daß** der in den Innenraum der Hülse (12") ragende Vorsprung als ein seitlich versetzt angebrachter, teilweise in den Innenraum der Hülse (12") ragender Raststift (39) ausgeführt ist.

8. Steckverbindung nach Anspruch 1,
**dadurch gekennzeichnet,**
**daß** die Ausnehmung des Federelements (21) als eine durchgehende Querbohrung (25) senkrecht durch eine Steckstiftachse ausgeführt ist, welche einen als Raststift (27) ausgeführten, in den Innenraum der Hülse (12') ragenden Vorsprung rastend umgreift.

9. Steckverbindung nach Anspruch 2,
**dadurch gekennzeichnet,**
**daß** in der durch den Anschlag vorgegebenen Endposition des Steckstifts (1, 1', 1") in der Hülse (12, 12', 12") die Ausnehmung des Federelements (8, 21, 33) einen definierten Versatz relativ zu dem in den Innenraum der Hülse (12, 12', 12") ragenden Vorsprung aufweist, so daß der Steckstift (1, 1', 1") zusätzlich mit einer permanent wirkenden Zugkraft in der Endposition fixiert ist.

10. Steckverbindung nach Anspruch 1,
**dadurch gekennzeichnet,**
**daß** der Steckstift (1, 1', 1") eine im wesentlichen zylinderförmige Grundform (5, 31) mit einem mindestens stellenweise radial vorspringenden, nicht rotationssymmetrischen Verdrehsicherungsabschnitt (4, 19, 30) aufweist, der im Bereich der Hülsenöffnung mit einem daran angepaßten Innenraum der Hülse (12, 12', 12") in Eingriff steht.

11. Steckverbindung nach Anspruch 10,
**dadurch gekennzeichnet,**
**daß** der Verdrehsicherungsabschnitt (4, 30) eine radial vorspringende, im wesentlichen zylinderförmige Grundform (5, 31) mit mindestens einer sich parallel zur Steckstiftachse erstreckenden ebenen Anflachung (6, 31) aufweist und daß die Hülse (12, 12") im Bereich der Hülsenöffnung einen daran angepaßten, nach innen ragenden Vorsprung (15, 38) aufweist.

12. Steckverbindung nach Anspruch 10,
**dadurch gekennzeichnet,**
**daß** der Verdrehsicherungsabschnitt (19) eine mehreckige Querschnittsfläche und die Hülse (12') im Bereich der Hülsenöffnung einen daran angepaßten Innenraum aufweist.

13. Steckverbindung nach Anspruch 10,
**dadurch gekennzeichnet,**
**daß** der Verdrehsicherungsabschnitt (4) mindestens einen radial vorspringenden Querstift (7) aufweist, der mit mindestens einer daran angepaßten Ausnehmung (14) der Hülse (12) im Bereich der Hülsenöffnung in Eingriff steht.

14. Steckverbindung nach Anspruch 1 und 10,
**dadurch gekennzeichnet,**
**daß** der Durchmesser des Federelements (8, 21, 33) höchstens so groß ist wie der kleinste Innendurchmesser der Hülse (12, 12', 12") im Bereich der Hülsenöffnung.

15. Steckverbindung nach Anspruch 1,
**dadurch gekennzeichnet,**
**daß** der Steckstift (1, 1', 1") und die Hülse (12, 12', 12") aus Metall, Keramik oder Kunststoff bestehen.

## Claims

1. A plug connection for jaw stump models for the releasably securing of tooth crown segments or jaw segments to a model base, with a plug pin (1, 1', 1 ") and a sleeve (12, 12', 12"), whereby the plug pin can be connected in snap-locking fashion with the sleeve and a rotational locking prevents a rotary movement of the plug pin in the sleeve,
**characterized in**
**that** at its end facing the sleeve (12, 12', 12") the plug pin (1, 1', 1") comprises a spring element (8, 21, 33) with at least one recess for snap-locking connection with the sleeve (12, 12', 12").

2. A plug connection according to claim 1,
**characterized in**
**that** the maximum penetration depth of the plug pin (1, 1', 1") in the sleeve (12, 12', 12") is limited by an abutment.

3. A plug connection according to claim 1,
**characterized in**
**that** the spring element (8, 21, 33) comprises at least one spring tongue.

4. A plug connection according to claim 1,
**characterized in**
**that** the spring element (8, 21, 33) comprises a substantially cylindrical basic element, which is divided into a plurality of spring tongues (10, 22, 34) by at least one longitudinal slot (9, 23, 35) extending as far as the end facing the sleeve (12, 12', 12").

5. A plug connection according to claim 1,
**characterized in**
**that** the spring element (8, 33) comprises a circumferential annular groove (11, 36) and can thereby be connected in snap-locking fashion with a matching projection projecting into the inner chamber of the sleeve (12, 12").

6. A plug connection according to claim 5,
**characterized in**
**that** the projection projecting into the inner chamber of the sleeve (12) is constructed as an annular circumferential constriction (16).

7. A plug connection according to claim 5,
**characterized in**
**that** the projection projecting into the inner chamber of the sleeve (12") is constructed as a laterally offset locking pin (39) partially projecting into the inner chamber of the sleeve (12").

8. A plug connection according to claim 1,
**characterized in**
**that** the recess of the spring element (21) is constructed as a continuous cross bore (25), which extends perpendicular through the plug pin axis and engages in snap-locking fashion around a projection constructed as a locking pin (27) projecting into the inner chamber of the sleeve (12').

9. A plug connection according to claim 2,
**characterized in**
**that** in the end position of the plug pin (1, 1', 1") in the sleeve (12, 12', 12") defined by the abutment, the recess of the spring element (8, 21, 33) has a defined degree of offset relative to the projection projecting into the inner chamber of the sleeve (12, 12', 12"), so that the plug pin (1, 1', 1") is additionally fixed in the end position with a permanently acting tensile force.

10. A plug connection according to claim 1,
**characterized in**
**that** the plug pin (1, 1', 1") comprises a substantially cylindrical basic form (5, 31) with a non-rotationally symmetrical rotational locking section (4, 19, 30), which projects radially at least in part and engages in the region of the sleeve opening with a matching inner chamber of the sleeve (12, 12', 12").

11. A plug connection according to claim 10,
**characterized in**
**that** the rotational locking section (4, 30) comprises a radially projecting, substantially cylindrical basic form (5, 31) with at least one flattened section (6, 31) extending parallel to the plug pin axis, and in the region of the sleeve opening the sleeve (12, 12") comprises a matching, inwardly projecting projection (15, 38).

12. A plug connection according to claim 10,
**characterized in**
**that** the rotational locking section (19) comprises a polygonal cross sectional surface and the sleeve (12') comprises a matching inner chamber in the region of the sleeve opening.

13. A plug connection according to claim 10,
**characterized in**
**that** the rotational locking section (4) comprises at least one radially projecting cross pin (7), which engages with at least one matching recess (14) of the sleeve (12) in the region of the sleeve opening.

14. A plug connection according to claim 1 and 10,
**characterized in**
**that** the diameter of the spring element (8, 21, 33) is, at the most, as large as the smallest internal diameter of the sleeve (12, 12', 12") in the region of the sleeve opening.

15. A plug connection according to claim 1,
**characterized in**
**that** the plug pin (1, 1', 1") and the sleeve (12, 12', 12") are made of metal, ceramic material or plastics material.

## Revendications

1. Cheville d'ancrage pour moulage maxillaire permettant la fixation amovible de segments de couronnes dentaires ou de mâchoire sur un socle, comprenant une broche d'ancrage (1, 1', 1") et une gaine (12, 12', 12"), la broche d'ancrage pouvant être reliée par encliquetage avec la gaine avec une sécurité anti-rotation empêchant une rotation de la broche d'ancrage dans la gaine,
**caractérisée en ce que**
la broche d'ancrage (1, 1', 1") présente, sur l'extrémité tournée vers la gaine (12, 12', 12"), un élément élastique (8, 21, 33) comportant au moins un évidement permettant la liaison par encliquetage avec la gaine (12, 12', 12").

2. Cheville d'ancrage selon la revendication 1,
**caractérisée en ce que**
la profondeur de pénétration maximale de la broche d'ancrage (1, 1', 1") est limitée, dans la gaine (12, 12', 12") par une butée.

3. Cheville d'ancrage selon la revendication 1,
**caractérisée en ce que**
l'élément élastique (8, 21, 33) présente au moins une languette.

4. Cheville d'ancrage selon la revendication 1,
**caractérisée en ce que**
l'élément élastique (8, 21, 33) présente un corps de base essentiellement cylindrique divisé en plusieurs languettes (10, 22, 34) avec au moins une fente longitudinale (9, 23, 35) continue s'étendant jusqu'à l'extrémité tournée vers la gaine (12, 12', 12").

5. Cheville d'ancrage selon la revendication 1,
**caractérisée en ce que**
l'élément élastique (8, 33) présente une rainure annulaire périphérique (11, 36) qui permet de le relier par encliquetage avec une saillie adaptée à l'intérieur de la gaine (12, 12").

6. Cheville d'ancrage selon la revendication 5,
**caractérisée en ce que**
la saillie dépassant à l'intérieur de la gaine (12) a la forme d'un étranglement (16) périphérique annulaire.

7. Cheville d'ancrage selon la revendication 5,
**caractérisée en ce que**
la saillie dépassant à l'intérieur de la gaine (12") est en forme de tige d'encliquetage (39) décalée sur le côté, dépassant en partie à l'intérieur de la gaine (12").

8. Cheville d'ancrage selon la revendication 1,
**caractérisée en ce que**
l'évidement de l'élément élastique (21) est en forme d'alésage transversal traversant (25) perpendiculaire à l'axe de la broche d'ancrage, qui enveloppe par encliquetage une saillie en forme de tige d'encliquetage (27), dépassant à l'intérieur de la gaine (12').

9. Cheville d'ancrage selon la revendication 2,
**caractérisée en ce que**
dans la position finale de la broche d'ancrage (1, 1', 1") prédéfinie par la butée dans la gaine (12, 12', 12"), l'évidement de l'élément élastique (8, 21, 33) présente un décalage défini par rapport à la saillie dépassant à l'intérieur de la gaine (12, 12', 12") de sorte que la broche d'encliquetage (1, 1', 1") est immobilisée en plus dans la positon finale avec une force de traction agissant en permanence.

10. Cheville d'ancrage selon la revendication 1,
**caractérisée en ce que**
la broche d'ancrage (1, 1', 1") présente une forme de base (5, 31) essentiellement cylindrique comportant un tronçon anti-rotation (4, 19, 30) dépassant radialement au moins par endroits et non symétrique en rotation, qui s'enclenche avec une zone intérieure de la gaine (12, 12', 12") adaptée en conséquence au niveau de l'ouverture de la gaine.

11. Cheville d'ancrage selon la revendication 10,
**caractérisée en ce que**
le tronçon anti-rotation (4, 30) présente une forme de base (5, 31) essentiellement cylindrique, en saillie radiale, comportant au moins un méplat (6, 31) plan s'étendant parallèlement à l'axe de la broche d'ancrage, et la gaine (12, 12") présente, au niveau de l'ouverture de gaine, une saillie (15, 38) adaptée en conséquence, dépassant vers l'intérieur.

12. Cheville d'ancrage selon la revendication 10,
**caractérisée en ce que**
le tronçon anti-rotation (19) présente une aire de section polygonale et la gaine (12') un espace intérieur adapté en conséquence au niveau de l'ouverture de gaine.

13. Cheville d'ancrage selon la revendication 10,
**caractérisée en ce que**
le tronçon anti-rotation (4) présente au moins une goupille transversale (7), en saillie radiale, qui s'enclenche avec au moins un évidement (14), adapté en conséquence, de la gaine (12) au niveau de l'ouverture de gaine.

14. Cheville d'ancrage selon les revendications 1 et 10,
**caractérisée en ce que**
le diamètre de l'élément élastique (8, 21, 33) est au plus égal au plus petit diamètre intérieur de la gaine (12, 12', 12") au niveau de l'ouverture de gaine.

15. Cheville d'ancrage selon la revendication 1,
**caractérisée en ce que**
la broche d'ancrage (1, 1', 1") et la gaine (12, 12', 12") sont en métal, en céramique ou en matière plastique.
